# EUROPÄISCHE PATENTSCHRIFT

(11) **EP 1 277 786 B1**
(45) Veröffentlichungstag und Bekanntmachung des Hinweises auf die Patenterteilung: **29.09.2004**
(21) Anmeldenummer: 02014869.8
(22) Anmeldetag: 04.07.2002
(51) Int. Cl.: C08G 77/50

(54) **Verzweigte Organosiloxan(co)polymere und deren Verwendung als Antimisting Additive für Siliconbeschichtungszusammensetzungen**
Branched Organosiloxane(co)polymers and their use as anti-misting additive for silicone coating compositions
(Co)polymères ramifiés de organosiloxane et leur utilisation comme additifs anti-buée dans des compositions de revêtement à base de silicone

(30) Priorität: 19.07.2001 DE 10135305; 21.03.2002 DE 10212659
(43) Veröffentlichungstag der Anmeldung: 22.01.2003
(73) Patentinhaber: Wacker-Chemie GmbH, 81737 München (DE)
(72) Erfinder: Herzig, Christian, Dr., 83329 Feichten/Waging am See (DE); Stallbauer, Reinhard, 84367 Gumpersdorf/Zeilarn (DE); Weizhofer, Christine, 84375 Kirchdorf (DE)
(74) Vertreter: Deffner-Lehner, Maria, Dr.

(56) Entgegenhaltungen:
- EP-A- 0 915 120
- EP-A- 1 010 715
- WO-A-01/98420
- CALGUO, GONG ET. AL.: "Hyperbranched Poly(siloxysilane)s: Control of Growth and End Functionalization with Polyolefins" PMSE-PREPRINT, Bd. 80, 1999, Seiten 139-140, XP001095945

## Beschreibung

Die Erfindung betrifft verzweigte Organosiloxan(co)polymere, deren Verzweigung aus mindestens dreiwertigen organischen Bausteinen besteht und deren Enden von organischen Gruppen gebildet werden, die über Si-C gebunden sind.
Weiterhin betrifft die Erfindung ein Verfahren zu deren Herstellung.
Weiterhin betrifft die Erfindung deren Verwendung als Antimisting Additive zur Reduktion der Aerosolbildung in vernetzbaren Siliconbeschichtungszusammensetzungen.

Verzweigte Organopolysiloxane, deren Verzweigungseinheiten üblichen Monoalkylsiloxyeinheiten entsprechen, sind in US-A 5,670,686 beschrieben. Aus vorgefertigten Siloxanen mit drei bzw. vier Hydrogendimethylsiloxyeinheiten werden in einem einstufigen Hydrosilylierungsprozeß verzweigte Siloxane mit unterschiedlichen Endgruppen hergestellt. Höher verzweigte Polysiloxane sind nicht beschrieben, alle Verzweigungsstellen entsprechen der konventionellen Siliconchemie.
Die Hydrogenvorprodukte, wie Tris[dimethylsiloxy]allylsilan werden in einem hydrolytischen Verfahren hergestellt und destillativ gereinigt.
Höher molekulare Siloxane können nur durch Equilibrieren erhalten werden, wobei die bei Alkylsiloxyeinheiten nur schlecht funktionierende saure Katalyse angewandt werden muss, da die basische Katalyse bei Stoffen, die Hydrogensiloxygruppen enthalten, zur chemischen Zersetzung führt.

Höher verzweigte Produkte können nach Polymer Preprints 34(1), 77 (1993) aus einem AB₃-Monomer erhalten werden, indem man Tris[dimethylsiloxy]allylsilan als Monomer einsetzt und nach Edelmetallkatalyse ein hochverzweigtes Carbosiloxan mit Hydrogendimethylsiloxyendgruppen erhält, das mit α-ungesättigten organischen Verbindungen umgesetzt wird. Diese nach der Polyaddition arbeitende Methode setzt die Herstellung eines äußerst energiereichen Monomers voraus, dessen Handhabung ein erhebliches Sicherheitsrisiko darstellt. Die Verzweigung beruht ausschließlich auf üblichen T-Einheiten (SiO_{3/2}-Einheiten). Siloxane, die Dialkylsiloxyeinheiten enthalten, sind nicht beschrieben und auch mit bekannten Methoden kaum erhältlich. Eine ähnliche Methodik ist beschrieben in PMSE-Prepr. 80, 139 (1999): Aus Bis[dimethylsiloxy]methylvinylsilan werden durch Polyaddition H-Dendrimere erhalten und danach mit α-ungesättigten organischen Verbindungen umgesetzt.

In DE-A 195 22 144 werden verzweigte Siloxancopolymere beschrieben, die durch Umsetzung von Verbindungen mit mindestens 3 in bezug auf Hydrogensilylierung reaktiven Doppelbindungen mit α,ω-Dihydrogensiloxanen und nachfolgender Umsetzung der in der 1. Stufe generierten Intermediate mit α,ω-Dienen, wie 1,5-Hexadien, erhalten werden. Zur Herstellung von verzweigten Siloxanen ist dieses Verfahren allerdings ungeeignet, da nur unlösliche Gele erhalten werden, insbesondere wenn aus wirtschaftlichen Gründen und wegen der angestrebten Produktreinheit der Einsatz von größeren Überschüssen an α,ω-Dienen vermieden werden soll.
Weiterhin können verzweigte Produkte, die gegenüber Hydrogensiloxanen inert sind, auf diese Weise nicht hergestellt werden.

Regelmäßige Dendrimere sind erhältlich nach Polymer Preprints 39 (1), 581 (1998), wenn Tetraallylsilan wiederholt mit Methyldichlorsilan und anschließend mit Allyl-Grignardlösung umgesetzt wird. Die Dendrimere sind allylfunktionell und können in einer Folgereaktion hydrosilyliert werden.

Klassische Dendrimere werden nach US-A 6,184,407 erhalten, wenn Siloxane mit mehreren SiH-Gruppen mit Vinylalkoxysilanen umgesetzt werden, die nun polymergebundenen Alkoxygruppen hydrolytisch gegen SiH enthaltende Siloxygruppen ausgetauscht werden, und damit Dendrimere entstehen, die wiederum mit Vinylkomponenten reagieren können. Der Herstellprozess ist aufwendig und teuer.

Ein Trend in der Siliconbeschichtungsindustrie ist die Erhöhung der Maschinengeschwindigkeit zur Steigerung der Produktivität. Werden Siliconbeschichtungen auf das Substrat bei höheren Geschwindigkeiten, beispielsweise von über 300 m/min, aufgebracht, können sich feine Sprühnebel des Siliconbeschichtungssystems bilden. Dieses Aerosol entsteht am Siliconauftragswerk. Diese Sprühnebelbildung erweist sich als ein ernstes Problem bei der weiteren Steigerung der Beschichtungsgeschwindigkeit.

Diese Sprühnebelbildung kann durch den Zusatz von sogenannten Antimisting Additiven zum Siliconbeschichtungssystem reduziert werden.

In EP-A 716 115 (Dow Corning Corp.) werden Antimisting Additive, die durch Reaktion einer Organosiliciumverbindung, einer Oxyalkylengruppen enthaltender Verbindung und eines Katalysators erhalten werden, beschrieben. Durch die Zugabe dieser Oxyalkylengruppen aufweisenden Umsetzungsprodukte zu vernetzbaren Siliconbeschichtungssystemen wird die Bildung von Aerosol in schnellen Beschichtungsprozessen reduziert.
Die Polyglykolgruppen aufweisenden Antimisting Additiven haben aber den Nachteil, dass sie mit den vernetzbaren Siliconbeschichtungszusammensetzungen schlecht mischbar sind.

WO 01/98420 (Dow Corning Corp.) offenbart eine flüssige Silicon Antimisting Zusammensetzung, die durch Umsetzung
(a) eines Organohydrogenpolysiloxans mit mindestens 2 Si-H-Gruppen (SiH) mit
(b) eines Organoalkenylsiloxans mit mindestens 3 Alkenylgruppen (C=C) in
(c) Gegenwart eines Platinkatalysators und gegebenenfalls
(d) eines Inhibitors
in einem Verhältnis von C=C/SiH ≥ 4,6 erhalten wird.
Ein extrem großer Überschuss an Organoalkenylsiloxan (C=C) ist notwendig, damit es zu keiner Vergelung kommt. Dieser Überschuss beeinflusst die Release-Eigenschaften des Basis-Systems, der vernetzbaren Siliconbeschichtungszusammensetzung. Weiterhin muss zur Verhinderung einer Vergelung ein Inhibitor zugesetzt werden.

Aufgabe der vorliegenden Erfindung war es, verzweigte bis stark verzweigte Organosiloxan(co)polymere bereitzustellen, die an den Enden Si-C gebundene organische Gruppen tragen, und die in einem einfachen Verfahren hergestellt werden können, ohne dass aufwendige Multistufenprozesse durchlaufen werden müssen und
wobei der Einsatz von teuren und gefährlich handzuhabenden Edukten vermieden werden soll.
So sollte vermieden werden, dass bei der Herstellung teure "monomere" Bausteine, wie Tris[dimethylsiloxy]allylsilan Verwendung finden, die außerdem keine Variabilität der Kettenlänge zwischen den Verzweigungsstellen erlauben und auch ein hohes Sicherheitsrisiko bei der Handhabung beinhalten.
Weiterhin bestand die Aufgabe Antimisting Additive für vernetzbare Siliconbeschichtungszusammensetzungen bereitzustellen, die die Aerosolbildung in schnellen Beschichtungsprozessen reduzieren, die mit den Siliconbeschichtungszusammensetzungen gut mischbar sind und die die Siliconbeschichtungszusammensetzungen nicht beeinträchtigen.
Die Aufgabe wird durch die Erfindung gelöst.

Gegenstand der Erfindung sind verzweigte Organosiloxan(co)polymere enthaltend Strukturelemente der Formel

Y[-CₙH₂ₙ-(R₂SiO)ₘ-Aₚ-R₂Si-G]ₓ (I)

wobei
- Y: einen drei- bis zehnwertigen, vorzugsweise drei- bis vierwertigen, Kohlenwasserstoffrest, der ein oder mehrere Heteroatome ausgewählt aus der Gruppe der Sauerstoff- und Stickstoffatome enthalten kann, bedeutet,
- R: gleich oder verschieden sein kann und einen einwertigen gegebenenfalls halogenierten Kohlenwasserstoffrest mit 1 bis 18 Kohlenstoffatomen je Rest bedeutet,
- A: einen Rest der Formel -R₂Si-R²-(R₂SiO)ₘ- bedeutet, wobei R² ein zweiwertiger Kohlenwasserstoffrest mit 2 bis 30 Kohlenstoffatomen, der durch ein oder mehrere voneinander separate Sauerstoffatome, vorzugsweise 1 bis 4 voneinander separate Sauerstoffatome unterbrochen sein kann, bedeutet,
- G: einen einwertigen Rest der Formel -C_{f}H_{2f-2k}-Z oder einen zweiwertigen Rest der Formel -CₙH₂ₙ- , wobei die zweite Bindung an einen weiteren Rest Y erfolgt, bedeutet,
- Z: einen einwertigen von endständigen aliphatischen Kohlenstoff-Kohlenstoff-Mehrfachbindungen freien Kohlenwasserstoffrest, der in Hydrosilylierungsreaktionen gegenüber SiH-Gruppen inert ist und ein oder mehrere Heteroatome ausgewählt aus der Gruppe von Sauerstoff, Stickstoff, Bor, Silicium und Titan enthält, oder einen einwertigen Polymerrest mit mehr als 20 Kohlenstoffatomen bedeutet,
- x: eine ganze Zahl von 3 bis 10, vorzugsweise 3 oder 4 ist,
- f: eine ganze Zahl von 2 bis 12, vorzugsweise 2, ist,
- k: 0 oder 1 ist
- n: eine ganze Zahl von 2 bis 12, vorzugsweise 2, ist,
- m: eine ganze Zahl von mindestens 1, vorzugsweise eine ganze Zahl von 1 bis 1000 ist und
- p: 0 oder eine ganze positive Zahl,
vorzugsweise 0 oder eine ganze Zahl von 1 bis 20 ist,
mit der Maßgabe, dass die verzweigten Organosiloxan(co)polymere durchschnittlich mindestens eine Gruppe Z enthalten.

Gegenstand der Erfindung ist weiterhin ein Verfahren zur Herstellung von verzweigten Organosiloxan(co)polymere, indem in einem ersten Schritt
mindestens drei aliphatische Doppelbindungen aufweisende Verbindungen (1) der Formel

Y(CR¹=CH₂)ₓ

wobei Y und x die oben dafür angegebene Bedeutung haben und R¹ ein Wasserstoffatom oder einen Alkylrest mit 1 bis 10 Kohlenstoffatomen bedeutet
mit Organopolysiloxanen (2) der allgemeinen Formel

H(R₂SiO)ₘ-Aₚ-R₂SiH

wobei A, R, m und p die oben dafür angegebene Bedeutung haben, in Gegenwart von die Anlagerung von Si-gebundenem Wasserstoff an aliphatische Mehrfachbindung fördernden Katalysatoren (3), sogenanntem Hydrosilylierungskatalysator,
umgesetzt werden,
und in einem zweiten Schritt die so erhaltenen Si-gebundene Wasserstoffatome aufweisenden verzweigten Zwischenprodukte (5) mit organischen Verbindungen (4) der Formel

C_{f}H_{2f-2k-1}-Z

ausgewählt aus der Gruppe von
wenn k=0:

H₂C=CR³-Z (4a)

und
wenn k=1:

R⁴C≡C-Z (4b)

wobei R³ und R⁴ die Bedeutung von R¹ haben, und
f, k und Z die oben angegebene Bedeutung haben,
in Gegenwart von die Anlagerung von Si-gebundenem Wasserstoff an aliphatische Mehrfachbindung fördernden Katalysatoren (3), umgesetzt werden.

Die im zweiten Schritt durch Addition von organischen Verbindungen (4) an die verzweigten Zwischenprodukte (5) erhaltenen erfindungsgemäßen verzweigten Organosiloxan(co)polymeren werden gegebenenfalls in einem dritten Schritt weiter modifiziert, wodurch der im zweiten Schritt eingeführte Substituent Z chemisch umgewandelt wird. Diese Vorgehensweise ist immer dann vorteilhaft, wenn eine Gruppe Z in Verbindung (4) inhibierende Eigenschaften auf den zweiten Reaktionsschritt ausübt, wie z.B. Phosphor oder Schwefel enthaltende Gruppen Z, oder wenn derartige Produkte schwer herstellbar oder gar nicht erhältlich sind. Um z.B. verzweigte Organosiloxanpolymere mit Harnstoffsubstituenten (Z = -CH₂NHCONHC₁₈H₃₇) zu erhalten, wird vorteilhaft im zweiten Schritt erst Allylamin addiert (Z = -CH₂NH₂) und die Aminofunktion nachfolgend mit Octadecylisocyanat umgesetzt. Die direkte Addition von N-Allyl-N'octadecylharnstoff läuft dagegen nur schleppend und unvollständig ab.

Zur Herstellung von amingeöffneten Epoxidsubstituenten ist es günstiger, erst Allylglycidylether an (5) zu addieren und das Produkt mit einem Amin (z.B. HNR₂) umzusetzen. Die direkte Addition von (4) mit Z = -CH₂OCH₂CH(OH)CH₂NR₂ führt zu unerwünschten Nebenreaktionen. Eine Mercaptoverbindung wie CH₂=CHCH₂O₂CCH₂SH kann unter Pt-Katalyse gar nicht mehr addiert werden. Zur Herstellung eines Organosiloxanpolymers mit Z = -CH₂O₂CCH₂SH addiert man daher besser in einem zweiten Schritt erst Allylalkohol und verestert in einem Folgeschritt mit Thioglykolsäure, oder man addiert erst Chloressigsäureallylester und tauscht anschließend -Cl gegen -SH aus.

Die erfindungsgemäßen Organosiloxan(co)polymeren umfassen daher auch Reste Z, die nicht direkt über die Verbindung (4) addiert werden können. Dies trifft auch für oligomere oder polymere Verbindungen (4) zu. Eine bevorzugte Herstellungsmethode für Polyestersubstituenten (Z= -CH₂[O₂C(CH₂)₄]ₙOH) ist beispielsweise die Addition von Allylalkohol an (5) im zweiten Schritt mit nachfolgender Aufpolymerisation von Caprolacton. Es ist auch vorteilhafter, in einem zweiten Schritt an die Zwischenstufe (5) erst eine ungesättigte Verbindung (4) mit Initiatorgruppe (z.B. Z = -C₆H₄-C(CH₃)₂Cl) zu addieren und danach mit bekannten Techniken (Meth)acrylester aufzupolymerisieren als allylterminierte Poly(meth)acrylate direkt zu addieren, was erhebliche Kompatibilitätsprobleme verursacht.

Die erfindungsgemäßen Organosiloxan(co)polymere mit verzweigter Struktur enthalten grundsätzlich kettenartige Siloxanblöcke, deren Enden über jeweils eine CₙH₂ₙ oder C_{f}H_{2f-2}-Brücke mit den Strukturelementen Y bzw. Z verbunden sind. Je mehr Siloxanblöcke beidseitig mit Elementen Y verbunden sind, um so verzweigter sind die erzeugten Produkte. Generell sind die erfindungsgemäßen Organosiloxan(co)polymere so aufgebaut, dass Siloxanblöcke und organische Blöcke miteinander abwechseln, wobei die Verzweigungsstrukturen und die Enden aus organischen Blöcken bestehen.
In den erfindungsgemäßen Organosiloxan(co)polymere beträgt das Verhältnis von Endgruppen Z zu Verzweigungsgruppen Y (Z/Y-Verhältnis) vorzugsweise 1,0 bis 2,0, bevorzugt 1,1 bis 1,5.

Die erfindungsgemäßen Organosiloxan(co)polymere besitzen vorzugsweise eine Viskosität von 50 bis 50 000 000 mPa·s bei 25°C, bevorzugt 500 bis 5 000 000 mPa·s bei 25°C und besonders bevorzugt 1 000 bis 1 000 000 mPa·s bei 25°C.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen; wobei der Methylrest besonders bevorzugt ist.

Beispiele für Alkylreste R¹ sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest und Decylreste, wie der n-Decylrest. Bevorzugt ist R¹ ein Wasserstoffatom.

Beispiele für Reste R² sind solche der Formel

-(CH₂)₂-

-(CH₂)₄-

- (CH₂)₆-

-(CH₂)₈-

-(CH₂)₁₀-

-C₆H₄-

-C₂H₄C₆H₄C₂H₄-

-C(CH₃)CH₂C₆H₄CH₂C(CH₃)-

und

-C₂H₄-Norbornandiyl-.

Beispiele für Reste R¹ gelten in vollem Umfang für Reste R³ und R⁴.
Bevorzugt ist R³ ein Wasserstoffatom.
Bevorzugt ist R⁴ ein Wasserstoffatom.

Im ersten Verfahrensschritt führt die Addition der SiH-Gruppe von (2) an die CH₂=CR¹-Gruppe von (1), die sogenannte Hydrosilylierung, zur dem Fachmann bekannten Bildung von zwei Isomeren wie folgt:

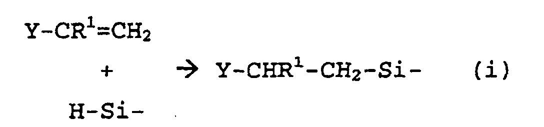

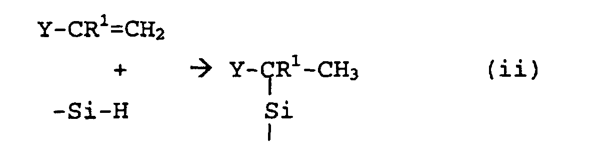

Die -CₙH₂ₙ-Gruppe in (I) der erfindungsgemäßen Organosiloxan(co)polymere umfasst diese Isomerenbildung und bedeutet daher vorzugsweise die isomeren Reste -CHR¹-CH₂- von (i) und 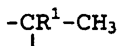 von (ii) und n ist daher die Gesamtzahl der C-atome in der CH₂=CR¹-Gruppe von (1). Da R¹ vorzugsweise ein Wasserstoffatom ist, ist n vorzugsweise 2.

Bei dem erfindungsgemäßen Verfahren kann eine Art von Verbindung (1) oder verschiedene Arten von Verbindung (1) eingesetzt werden.

Beispiele für Verbindungen (1), mit denen die erfindungsgemäßen verzweigten Organosiloxan(co)polymere herstellbar sind, sind
1,2,4-Trivinylcyclohexan,
1,3,5-Trivinylcyclohexan,
3,5-Dimethyl-4-vinyl-1,6-heptadien,
1,2,3,4-Tetravinylcyclobutan,
Methyltrivinylsilan,
Tetravinylsilan,
1,1,2,2-Tetraallyloxyethan,
wobei 1,2,4-Trivinylcyclohexan bevorzugt ist.

Beispiele für den Rest Y sind daher solche der Formel 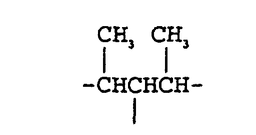 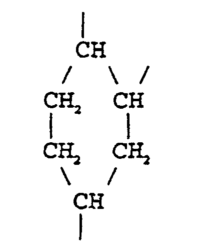 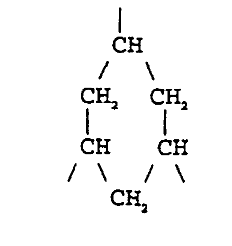 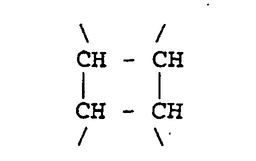 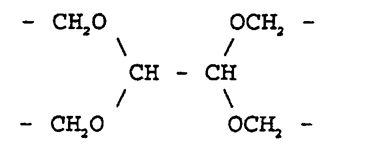 wobei der Rest der Formel 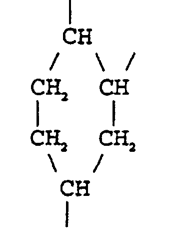 bevorzugt ist.

Bei dem erfindungsgemäßen Verfahren kann eine Art von Organopolysiloxan (2) oder verschiedene Arten von Organopolysiloxan (2) eingesetzt werden.

Als Organopolysiloxan (2) wird ein weitgehend lineares Polymer eingesetzt.
- p: ist bevorzugt 0.
- m: ist bevorzugt eine ganze Zahl von 5 bis 400.

Organopolysiloxan (2) wird im ersten Verfahrensschritt in solchen Mengen eingesetzt, dass das Verhältnis von Si-gebundenem Wasserstoff in Organopolysiloxan (2) zu aliphatischer Doppelbindung in Verbindung (1) vorzugsweise mindestens 1,5, bevorzugt 1,5 bis 20, besonders bevorzugt 1,5 bis 5,0, besonders bevorzugt 1,5 bis 3,0 beträgt.

Da Organopolysiloxan (2) vorzugsweise im Überschuss eingesetzt wird, reagieren daher in dem ersten Verfahrensschritt alle aliphatischen Doppelbindungen in der Verbindung (1) ab, und es werden verzweigte Organosiloxan(co)polymere (5) erhalten, die Si-gebundene Wasserstoffatome aufweisen. Im Fall von niedermolekularen Organopolysiloxanen (2) mit p=0 und m=1-6 können durch die anschließende destillative Entfernung des überschüssigen Organopolysiloxan (2) Zwischenprodukte (5) praktisch frei von Organopolysiloxan (2) erhalten werden. In den übrigen Fällen wird überschüssiges Organopolysiloxan (2) vorzugsweise im Reaktionsgemisch belassen, wodurch die Zwischenprodukte (5) verdünnt werden. Um lösliche, d.h. unvernetzte Zwischenprodukte (5) zu erhalten wird daher vorzugsweise ein Molverhältnis von SiH in (2) zu C=C in (1) von mindestens 1,5 eingesetzt. Das erforderliche Molverhältnis hängt von der jeweiligen Struktur von (1) und dem Index x ab und kann vom Fachmann im Einzelfall durch Handversuche experimentell ermittelt werden.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetra-methyl- disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird im ersten Verfahrensschritt vorzugsweise in Mengen von 0,2 bis 20 Gew.-ppm (Gewichtsteilen je Million Gewichtsteilen), bevorzugt in Mengen von 1 bis 10 Gew.-ppm, jeweils berechnet als elementares Platin und bezogen auf das Gesamtgewicht von Verbindung (1) und Organopolysiloxan (2) eingesetzt.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 40°C bis 100°C durchgeführt.

Da die mindestens drei aliphatische Doppelbindungen aufweisende Verbindung (1), z. B. 1,2,4-Trivinylcyclohexan, bei höheren Temperaturen zur Polymerisation neigt, können bei dem ersten Verfahrensschritt vorzugsweise Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an Verbindung (1) und Organopolysiloxan (2), eingesetzt.

In dem ersten wie auch im zweiten Verfahrensschritt können vorzugsweise inerte, organische Lösungsmittel mitverwendet werden. Beispiele für inerte, organische Lösungsmittel sind Toluol, Xylol, Octanisomere, Heptanisomere, Butylacetat, 1,2-Dimethoxyethan, Tetrahydrofuran und Cyclohexan.

Die gegebenenfalls mitverwendeten inerten organischen Lösungsmittel können nach dem ersten bzw. zweiten Verfahrensschritt destillativ entfernt werden oder im Reaktionsgemisch verbleiben.

Die organischen Verbindungen (4) enthalten aliphatische C-C-Doppel- oder Dreifachbindungen, die gegenüber Si-H-Gruppen in Hydrosilylierungsreaktionen reaktiv sind und diese unter Bildung von Si-C-Bindungen anlagern.
Wenn k=0 enthält die reaktive Gruppe eine Doppelbindung und die organische Verbindung (4) ist eine Verbindung (4a) der Formel H₂C=CR³-Z.
Wenn k=1 enthält die reaktive Gruppe eine Dreifachbindung und die organische Verbindung (4) ist eine Verbindung (4b) der Formel R⁴C≡C-Z.
Bei der Anlagerung der SiH-Gruppe in dem Zwischenprodukt (5) an die Doppel- oder Dreifachbindung in (4a) oder (4b) kommt es zur dem Fachmann bekannten Bildung von Isomeren wie folgt:

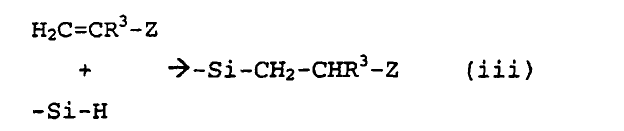

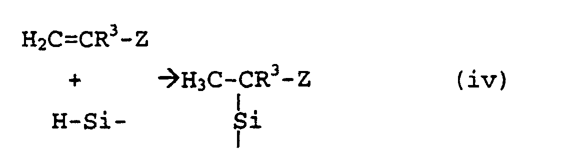

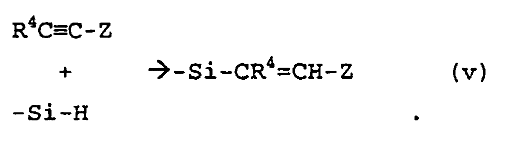

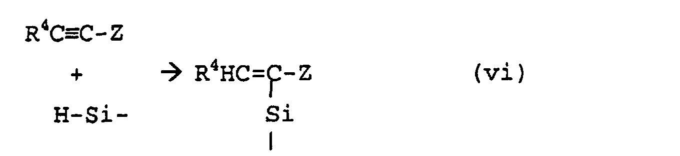

Die -C_{f}H_{2f-2k}-Gruppe in (I) der erfindungsgemäßen Organosiloxan(co)polymere umfasst diese Isomerenbildung und bedeutet daher vorzugsweise die isomeren Reste -CH₂-CHR³- von (iii) und 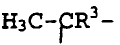 von (iv) und -CR⁴=CH- von (v) und 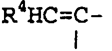 von (vi) und f ist daher die Gesamtzahl der C-atome in der H₂C=CR³-Gruppe von (4a) oder der R⁴C≡C-Gruppe von (4b).
Da R³ und R⁴ vorzugsweise Wasserstoffatome sind, ist f daher vorzugsweise 2.

Beispiele für die H₂C=CR³-Gruppe in der organischen Verbindung (4a) sind

H₂C=CH-

H₂C=C(CH₃)-

H₂C=C(C₄H₉)-

und

H₂C=C(C₈H₁₇)- .

Beispiele für die R⁴C≡C-Gruppe in der organischen Verbindung (4b) sind

HC≡C-

CH₃C≡C-

und

C₄H₉C≡C- .

Der an die Doppel- oder Dreifachbindung gebundene Rest Z in (4a) oder (4b) kann außer Kohlenstoff- und Wasserstoffatomen auch ein oder mehrere Heteroatome ausgewählt aus der Gruppe von Sauerstoff, Stickstoff, Bor, Silicium und Titan enthalten und ist in einer Hydrosilylierungsreaktion gegenüber SiH-Gruppen nicht reaktiv.

Die ungesättigte Verbindung (4) kann somit funktionelle Gruppen enthalten, wie Hydroxy-, Ether-, Ester-, Amido-, Urethan-, Harnstoff-, Amino-, Oximo-, Imino-, Carboxyl-, Carbonyl- oder Epoxigruppen. Bevorzugt enthält sie keine Gruppen, die die Hydrosilylierungsreaktion wesentlich behindern.

Beispiele für Reste Z sind

-(CH₂)₅CH₃

-(CH₂)₉CH₃

-(CH₂)₁₅CH₃

-C(CH₃)₂OH

-(CH₂)₄OH

-OC₄H₉

-CO₂CH₃

-(CH₂)₈CO₂C₃H₇

-(CH₂)₈CON(C₂H₅)₂

-CH₂O₂CNHC₁₈H₃₇

-CH₂NHCONHC₁₈H₃₇

-CH₂NH₂

-(CH₂)₈CO₂H

-CO₂H

-COCH₃

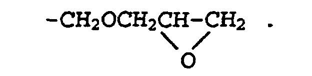

-CH₂OCH₂CH(OH)CH₂NH-CH₃

-CH₂OCH₂CH(OH)CH₂N(CH₃)₂

-CH₂OCH₂CH(OH)CH₂NH(CH₂)₃N(CH₃)₂

-CH₂OCH₂CH(OH)CH₂N((CH₂)₃N(CH₃)₂)₂

-C(CH₃)₂Cl

.

-C(CH₃)₂J

-C(CH₃)₂O₂CCH₃

-C(CH₃)₂O₃CCH₃

-C(CH₃)₂O₂H

-C(CH₃)₂O₂C(CH₃)₃

-C(CH₃)=CH₂

-C₆H₄C(CH₃)=CH₂

-C₆H₄C(CH₃)₂Cl

-C₆H₄C(CH₃)₂OH

-C₆H₄C(CH₃)₂O₂H

-C₆H₄C(CH₃)₂O₂CCH₃

-C₆H₄C(CH₃)₂O₂CCH₂Cl

und

-C₆H₄C (CH₃)₂O₃CCH₃.

Beispiele für Reste G sind daher

-(CH₂)₇CH₃

-(CH₂)₁₁CH₃

-(CH₂)₁₇CH₃

-(CH₂)₂C(CH₃)₂OH

-CH=CH-C(CH₃)₂OH

-(CH₂)₆OH

-(CH₂)₂OC₄H₉

-(CH₂)₂CO₂CH₃

-(CH₂)₁₀CO₂C₃H₇

-(CH₂)₁₀CON(C₂H₅)₂

-(CH₂)₃O₂CNHC₁₈H₃₇

-(CH₂)₃NHCONHC₁₈H₃₇

-(CH₂)₃NH₂

-(CH₂)₁₀CO₂H .

-(CH₂)₂CO₂H

-(CH₂)₂COCH₃

und

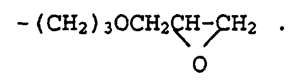

Die ungesättigte Verbindung (4) kann monomeren, oligomeren oder polymeren Charakter haben. Daher entsprechen der Definition von Z auch organische Reste, die Polyether, Polyester, Polyurethan, Polyharnstoff, Polyamid, Polyolefin, Polyacrylat oder Polyacetal enthalten. Bevorzugt als Polymerreste sind Polyether, Polyester, Polyolefin und Polyacrylat.

Beispiele für organische Verbindungen (4a) sind

CH₂=CH(CH₂)₅CH₃

CH₂=CH(CH₂)₁₅CH₃

CH₂=CH-C(CH₃)₂OH

CH₂=CH(CH₂)₄OH

CH₂=CHOC₄H₉

CH₂=CHCO₂CH₃

CH₂=CH(CH₂)₈CO₂C₃H₇

CH₂=CH(CH₂)₈CON(C₂H₅)₂

CH₂=CH-CH₂O₂CNHC₁₈H₃₇

CH₂=CH-CH₂NH₂

CH₂=CH(CH₂)₈CO₂H

CH₂=CH-COCH₃

und

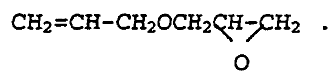

Beispiele für organische Verbindungen (4b) sind

CH≡C-C₆H₅

CH≡C-CH₂OH

CH≡C-C(CH₃)₂OH

CH≡C-CH₂OC₄H₉

CH≡C-CO₂H

CH≡C-CO₂C₂H₅

und

CH≡C-CH₂O₂CNHC₁₈H₃₇ .

Beispiele für oligomere/polymere organische Verbindungen (4) sind solche Oligomere/Polymere, die eine reaktive Mehrfachbindung in bezug auf die Hydrosilylierungsreaktion enthalten. Insbesondere sind dies mit Allylalkohol gestartete Polyether, nachträglich allylierte mit Alkanolen gestartete Polyether, mit Allylalkohol gestartetes Polycaprolactam, sowie Olefine und Acrylate, die anionisch polymerisiert werden und mit einer ungesättigten kationischen Verbindung, wie Dimethylvinylchlorsilan, terminiert werden.
Wahlweise können Olefine, wie z.B. Isobuten auch kationisch polymerisiert und mit einer anionischen Verbindung, wie einem Alkenylgrignard, terminiert werden, um erfindungsgemäß eingesetzte Verbindungen (4) zu erzeugen.

Im zweiten Verfahrensschritt können eine Art von Verbindung (4) oder verschiedene Arten von Verbindung (4) eingesetzt werden. Es können eine oder mehrere Verbindungen (4) gleichzeitig oder nacheinander eingesetzt werden und es können daher auch mehrere verschiedene Funktionen in die erfindungsgemäßen verzweigten Organosiloxan(co)polymere eingebaut werden.

Im zweiten Verfahrensschritt wird die organische Verbindung (4) in solchen Mengen eingesetzt, dass das Verhältnis von aliphatischer Doppelbindung in (4a) bzw. aliphatischer Dreifachbindung in (4b) zu Si-gebundenem Wasserstoff in dem im ersten Verfahrensschritt erhaltenen Zwischenprodukt (5) vorzugsweise 0,5 bis 2,0, bevorzugt 1,05 bis 2,0, besonders bevorzugt 1,05 bis 1,5, beträgt.

Die Verbindung (4) kann in stöchiometrischem Über- oder Unterschuss, bezogen auf das Zwischenprodukt (5), eingesetzt werden. Wird eine unterstöchiometrische Menge (4) eingesetzt, erhält man verzweigte Organosiloxan(co)polymere, die zusätzlich zu der über (4) eingebrachten funktionellen Gruppe Z noch reaktive SiH-Gruppen enthalten. Eine bevorzugte Ausführung für die Herstellung der erfindungsgemäßen verzweigten Organosiloxan(co)polymere ist aber der Einsatz von mindestens einer equimolaren Menge an (4), also der Einsatz von gleich oder mehr der reaktiven Mehrfachbindungen in (4), bezogen auf die SiH-Gruppen in (5). Ein bevorzugtes Stöchiometrieverhältnis liegt daher im Bereich 1,05 bis 2,0.

Bei der Durchführung des zweiten Verfahrensschrittes ist es möglich, Verbindung (4) zum katalysierten Zwischenprodukt (5) zu dosieren oder umgekehrt. Bevorzugt ist aber die Vorlage der Verbindung (4) mit Katalysator (3), worauf das Zwischenprodukt (5) dosiert wird. Sofern die Wärmetönung dieser Hydrosilylierungsreaktion eher gering ist, wird vorteilhaft ein Gemisch aus (4) und (5) bei geeigneter Temperatur mit Katalysator (3) gestartet, wobei bei adiabatischer Fahrweise die Erwärmung des Reaktionsgemisches ein Maß für den Fortschritt der Reaktion selbst ist.

Wenn die Verbindung (4) flüchtig ist, kann die überschüssige Verbindung (4) destillativ entfernt werden, ansonsten verbleibt sie im Endprodukt.

Der Katalysator (3) wird im zweiten Verfahrensschritt vorzugsweise in Mengen von 0,5 bis 50 Gew.-ppm (Gewichtsteilen je Million Gewichtsteilen), bevorzugt in Mengen von 2 bis 20 Gew.-ppm, jeweils berechnet als elementares Platin und bezogen auf das Gesamtgewicht von organischer Verbindung (4) und im ersten Verfahrensschritt erhaltenes Zwischenprodukt (5) eingesetzt.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 20°C bis 150°C, bevorzugt 40°C bis 120°C, durchgeführt.

Beispiele für die erfindungsgemäßen verzweigten Organosiloxan(co)polymere sind:

Wenn im ersten Verfahrensschritt 1,2,4-Trivinylcyclohexan (1) mit H(Me₂SiO)₇Me₂SiH (2) umgesetzt wird und im zweiten Verfahrensschritt das im ersten Verfahrensschritt erhaltene Si-gebundene Wasserstoffatome aufweisende Zwischenprodukt (5) mit 1-Octen (4) umgesetzt wird, wird beispielsweise eine Verbindung der Formel erhalten:

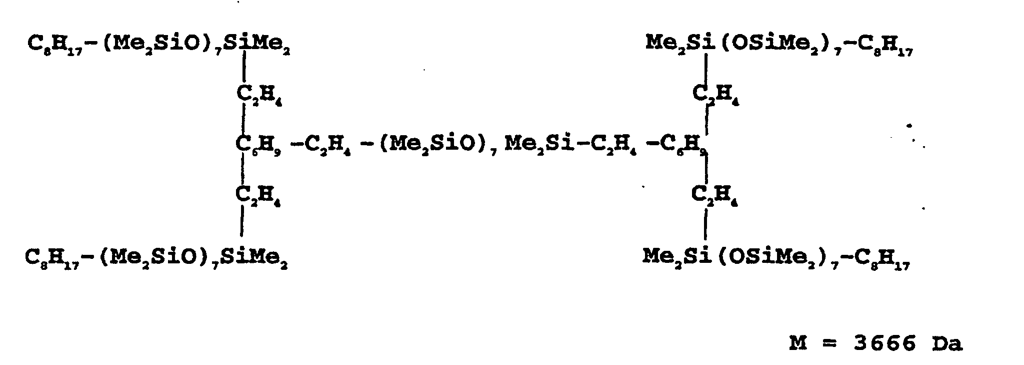

Wenn im ersten Verfahrensschritt Methyltrivinylsilan (1) mit H(Me₂SiO)₁₉₀Me₂SiH (2) umgesetzt wird und im zweiten Verfahrensschritt das im ersten Verfahrensschritt erhaltene Si-gebundene Wasserstoffatome aufweisende Zwischenprodukt (5) mit 3-Methylbut-1-in-3-ol der Formel HC≡C-C(Me₂)-OH (4) umgesetzt wird, wird beispielsweise eine Verbindung der Formel erhalten:

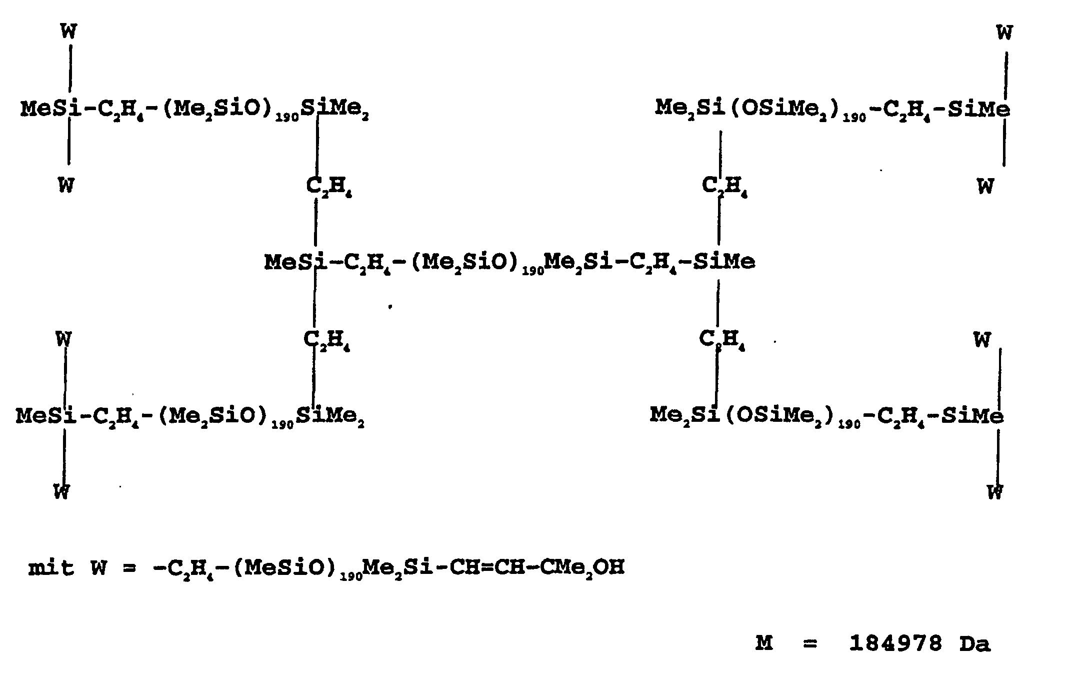

Zur Herstellung der erfindungsgemäßen verzweigten Organosiloxan(co)polymere können die Schritte 1 und 2 des erfindungsgemäßen Verfahrens auch gleichzeitig ausgeführt werden, was je nach Art der Verbindungen (1), (2) und (4) zu Produkten mit modifizierten Eigenschaften führen kann, sofern dies gewünscht ist.
Ebenso können die Schritte 1 und 2 in umgekehrter Reihenfolge durchgeführt werden. Hierbei wird Organopolysiloxan (2) im Überschuss mit Verbindung (4) in Gegenwart von Katalysator (3) umgesetzt und anschließend das Si-gebundene Wasserstoffatome aufweisende Zwischenprodukt mit Verbindung (1) in Gegenwart von Katalysator (3) umgesetzt. Um mit dem Verfahren in umgekehrter Reihenfolge Produkte mit vergleichbaren Produkteigenschaften wie mit dem normalen bevorzugten Verfahren zu erhalten, ist eine entsprechende Anpassung der Mengenverhältnisse der eingesetzten Verbindungen (1), (2) und (4) erforderlich.
Sofern der Katalysator (3) seine Aktivität über den 1. Verfahrensschritt hinaus behält, kann für den 2. Verfahrensschritt auch auf eine erneute Zugabe von Katalysator (3) verzichtet werden.

Die erfindungsgemäßen Produkte können - je nach ihrer individuellen Struktur und der Art der Substituenten G - für sehr verschiedene Anwendungsgebiete verwendet werden. Aus technischer Sicht eignen sie sich als Additive zur Regulierung des Fließverhaltens, als Kompatibilisatoren, Emulgatoren, Vernetzer, vernetzbare Polymere sowie Copolymere zur Herstellung von Formkörpern und Beschichtungsmitteln.

Eine besondere Eigenschaft erfindungsgemäßer Produkte ist, dass ein Siloxangrundkörper mit vielen Strukturelementen G in sterisch gleichwertiger Position substituiert ist, also anders als dies von kammständig substituierten Siloxanen bekannt ist. Es kann also Siliconeigenschaft mit ganz anderer Polarität auf sehr variable Weise kombiniert werden. Anwendungsfelder sind daher in der Kosmetikindustrie, der Lack- und Farbenindustrie, im Additivsektor, in der Wasch- und Reinigungsindustrie sowie in der Kunststofftechnik.

Gegenstand der Erfindung ist weiterhin die Verwendung von Antimisting Additiven in vernetzbaren Siliconbeschichtungszusammensetzungen zur Reduktion der Aerosolbildung, dadurch gekennzeichnet, dass als Antimisting Additive die erfindungsgemäßen verzweigten Organosiloxan(co)polymere eingesetzt werden.

Gegenstand der Erfindung ist weiterhin die Verwendung von Antimisting Additiven in vernetzbaren Siliconbeschichtungszusammensetzungen zur Reduktion der Aerosolbildung, dadurch gekennzeichnet, dass als Antimisting Additive verzweigte Organsiloxan(co)polymere, herstellbar nach dem erfindungsgemäßen Verfahren, eingesetzt werden.

Die erfindungsgemäßen Antimisting Additive, die verzweigten Organosiloxan(co)polymere, haben den Vorteil, dass sie nicht nur die Aerosolbildung vernetzbarer Siliconbeschichtungszusammensetzungen in schnellen Beschichtungssystemen reduzieren sondern dass sie insbesondere mindestens in den eingesetzten Mengenverhältnissen homogen mit den vernetzbaren Siliconbeschichtungszusammensetzungen mischbar sind im Gegensatz zu den Polyglykolgruppen aufweisenden Antimisting Additiven gemäß der eingangs zitierten EP-A 716 115.

Weiterhin weisen die erfindungsgemäßen Antimisting Additive keine inhibierende Wirkung auf und sie sind lagerstabil. Die erfindungsgemäßen Antimisting Additive haben den Vorteil, dass sie vorab mit der Polymerkomponente (A) der vernetzbaren Siliconbeschichtungszusammensetzung abgemischt werden können. Sie sind damit einfach handhabbar und beeinträchtigen die Release-Eigenschaften des Basis-Systems, der vernetzbaren Siliconbeschichtungszusammensetzung, nicht.

Die als Antimisting Additive eingesetzten verzweigten Organosiloxan(co)polymere weisen eine Viskosität von bevorzugt 400 bis 5 000 000 mPa.s bei 25°C, besonders bevorzugt 400 bis 1 000 000 mPa.s bei 25°C auf.

Als Antimisting Additive werden bevorzugt solche verzweigten Organosiloxan(co)polymere eingesetzt, die besonders hohe Verzweigungen aufweisen. Das Ausmaß der Verzweigungen wird in dem Schritt festgelegt, in dem Verbindung (1) umgesetzt wird. Bevorzugte Additive werden erhalten, wenn in den angegebenen besonders bevorzugten stöchiometrischen Bereichen gearbeitet wird.

Die erfindungsgemäßen Antimisting Additive werden zur Reduktion der Aerolsolbildung den vernetzbaren Siliconbeschichtungszusammensetzungen zugegeben.

Die erfindungsgemäßen Antimisting Additive, die verzweigten Organosiloxan(co)polymere, werden in den vernetzbaren Siliconbeschichtungszusammensetzungen vorzugsweise in Mengen von 0,5 bis 10 Gew.-%, bevorzugt 1 bis 5 Gew.-%, bezogen auf das Gesamtgewicht der vernetzbaren Siliconbeschichtungszusammensetzungen, eingesetzt.

Als vernetzbare Siliconbeschichtungszusammensetzungen werden vorzugsweise solche enthaltend
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren
eingesetzt.

Gegenstand der Erfindung sind weiterhin vernetzbare Siliconbeschichtungszusammensetzungen mit reduzierter Aerosolbildung enthaltend (X) erfindungsgemäße Antimisting Additive
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren.

Bei den vernetzbaren Siliconbeschichtungszusammensetzungen kann vorzugsweise eine Art des erfindungsgemäßen Antimisting Additivs (X) oder verschiedene Arten des erfindungsgemäßen Antimisting Additivs (X) eingesetzt werden.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel 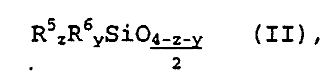 wobei R⁵ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
R⁶ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,
z 0, 1, 2 oder 3,
y 0, 1 oder 2
und die Summe z+y 0, 1, 2 oder 3 ist,
mit der Maßgabe, dass durchschnittlich mindestens 1,5 Reste R⁶, bevorzugt durchschnittlich mindestens 2 Reste R⁶, vorliegen, verwendet.

Bevorzugt als Organosiliciumverbindungen (A) sind Organopolysiloxane der allgemeinen Formel

R⁶ _{g}R⁵ _{3-g}SiO(SiR⁵ ₂O)ᵥ(SiR⁵R⁶O)_{w}SiR⁵ _{3-g}R⁶ _{g} (III)

wobei R⁵ und R⁶ die oben dafür angegebene Bedeutung haben,
g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste R⁶, bevorzugt durchschnittlich mindestens 2 Reste R⁶, enthalten sind.

Im Rahmen dieser Erfindung soll Formel (III) so verstanden werden, dass v Einheiten -(SiR⁵₂O)- und w Einheiten -(SiR⁵R⁶O)- in beliebiger Weise im Organopolysiloxanmolekül verteilt sein können.

Als Organosiliciumverbindungen (A) können auch verzweigte Polymere mit endständigen ω-Alkenylgruppen, bevorzugt Si-gebundene Vinylgruppen, wie sie in US 6,034,225 (incorporated by reference), insbesondere Spalte 1, Zeile 43 bis Spalte 2, Zeile 13, und US 6,258,913 (incorporated by reference), insbesondere Spalte 1, Zeile 62 bis Spalte 2, Zeile 35, beschrieben sind, verwendet werden.
Als Organosiliciumverbindungen (A) können auch lineare Organopolysiloxane, wie sie in US 6,274,692 (incorporated by reference), insbesondere Spalte 2, Zeile 3 bis 27, beschrieben sind und die nicht an beiden Enden je einen aliphatisch ungesättigten Kohlenwasserstoffrest, wie eine Si-gebundene Vinylgruppe, aufweisen sondern an den Enden auch aliphatisch gesättigte Kohlenwasserstoffreste, wie Si-gebundene Methylgruppen aufweisen, verwendet werden.
Als Organosiliciumverbindungen (A) können auch solche, wie sie in US-A 5,241,034 (incorporated by reference),insbesondere Spalte 16, Zeile 23 bis Spalte 17, Zeile 35, DE-A 195 22.144 (incorporated by reference), insbesondere Seite 2, Zeile 44 bis 67, DE-A 196 29 053 (incorporated by reference), insbesondere Seite 2, Zeile 51 bis Seite 3, Zeile 29, US-A 5,760,145 (incorporated by reference), insbesondere Spalte 2, Zeile 46 bis Spalte 4, Zeile 23 und US-A 6,265,497 (incorporated by reference), insbesondere Spalte 2, Zeile 3 bis 47, beschrieben sind, verwendet werden.

Die Organopolysiloxane (A) besitzen vorzugsweise eine durchschnittliche Viskosität von 100 bis 10 000 mPa.s bei 25°C.

Beispiele für Kohlenwasserstoffreste R⁵ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste R⁶ sind Alkenylreste, wie der Vinyl-, 5-Hexenyl-, Allyl-, 3-Butenyl- und 4-Pentenylrest; und Alkinylreste, wie der Ethinyl-, Propargyl- und 1-Propinrest.

Als Organosiliciumverbindungen (B), die Si-gebundene Wasserstoffatome aufweisen, werden vorzugsweise lineare, cyclische oder verzweigte Organopolysiloxane aus Einheiten der allgemeinen Formel 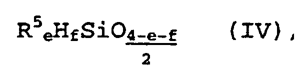 wobei
R⁵ die oben dafür angegebene Bedeutung hat,
e 0, 1, 2 oder 3,
f 0, 1 oder 2
und die Summe von e+f 0, 1, 2 oder 3 ist,
mit der Maßgabe, dass durchschnittlich mindestens 2 Si-gebundene Wasserstoffatome vorliegen, verwendet.

Vorzugsweise enthalten die Organosiliciumverbindungen (B) mindestens 3 Si-gebundene Wasserstoffatome.

Bevorzugt werden als Organosiliciumverbindungen (B) Organopolysiloxane der allgemeinen Formel

HₕR⁵ ₃₋ₕSiO(SiR⁵ ₂O)ₒ(SiR⁵HO)ₚSiR⁵ ₃₋ₕHₕ (V)

wobei R⁵ die oben dafür angegebene Bedeutung hat,
h 0, 1 oder 2,
o 0 oder eine ganze Zahl von 1 bis 1500 und
p 0 oder eine ganze Zahl von 1 bis 200 ist,
mit der Maßgabe, dass durchschnittlich mindestens 2 Si-gebundene Wasserstoffatome, vorliegen, verwendet.

Im Rahmen dieser Erfindung soll Formel (V) so verstanden werden, dass o Einheiten -(SiR⁵₂O)- und p Einheiten -(SiR⁵HO)- in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxanund/oder Phenylmethylsiloxaneinheiten.

Als Organosiliciumverbindungen (B) können auch solche, wie sie in US-A 5,691,435 (incorporated by reference), insbesondere Spalte 3, Zeile 45 bis Spalte 4, Zeile 29, beschrieben sind, verwendet werden.

Die Organopolysiloxane (B) besitzen vorzugsweise eine durchschnittliche Viskosität von 10 bis 1 000 mPa.s bei 25°C.

Organosiliciumverbindung (B) wird vorzugsweise in Mengen von 0,5 bis 3,5, bevorzugt 1,0 bis 3,0 Grammatom Si-gebundenen Wasserstoff je Mol Si-gebundenen Restes mit aliphatischer Kohlenstoff-Kohlenstoff-Mehrfachbindung in der Organosiliciumverbindung (A) eingesetzt.

Als die Anlagerung von Si-gebundenem Wasserstoff an aliphatische Mehrfachbindungen fördernde Katalysatoren können auch bei den vernetzbaren Siliconbeschichtungszusammensetzungen die gleichen Katalysatoren eingesetzt werden, die auch bisher zur Förderung der Anlagerung von Si-gebundenem Wasserstoff an aliphatische Mehrfachbindung eingesetzt werden konnten. Als Bestandteil (C) werden vorzugsweise die oben genannten Katalysatoren (3) verwendet.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A) und (B), eingesetzt.

Die vernetzbaren Siliconbeschichtungszusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC≡C-C(CH₃)(OH)-CH₂-CH₂-CH=C(CH₃)₂, käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

R⁷R⁵₂SiO_{1/2} und SiO₂ ,

sogenannte MQ-Harze, wobei R⁷ ein Wasserstoffatom, ein Kohlenwasserstoffrest R⁵, wie Methylrest, ein Alkenylrest R⁶, wie Vinylrest, ist, und R⁵ und R⁶ die oben dafür angegebene Bedeutung haben und die Einheiten der Formel R⁷R⁵₂SiO_{1/2} gleich oder verschieden sein können. Das Verhältnis von Einheiten der Formel R⁷R⁵₂SiO_{1/2} zu Einheiten der Formel SiO₂ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele für organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (X), (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den nun beschichteten Oberflächen beträgt vorzugsweise 0,3 bis 6 µm, besonders bevorzugt 0,5 bis 2,0 µm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die die erfindungsgemäßen Antimisting Additiven enthaltenden vernetzbaren Siliconbeschichtungszusammensetzungen eignen sich insbesondere zur Verwendung in schnellen Beschichtungssystemen mit Beschichtungsgeschwindigkeiten vorzugsweise von 300 bis 1500 m/min, bevorzugt 400 bis 1000 m/min, bei denen die erfindungsgemäßen Zusammensetzungen bei hohen Geschwindigkeiten auf die zu beschichtenden Oberflächen aufgebracht werden.

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstofffilm, der beispielsweise auf einem Etikettenfacepapier aufliegt, auf das beschichtete Papier aufgetragen und der Verbund wird dann zusammengepresst. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren können mit den erfindungsgemäßen Zusammensetzungen bei einer Geschwindigkeit von 300 bis 1500 m/min, bevorzugt 400 bis 1000 m/min, betrieben werden.

### Beispiel 1:

In einem Glaskolben mit mechanischem Rührer werden 108 g 1,2,4-Trivinylcyclohexan mit 1840 g eines α,ω-Dihydrogenpolydimethylsiloxans mit einem Gehalt an Aktivwasserstoff (Si-gebundener Wasserstoff) von 0,18 Gew.-% (SiH/C=C = 1,66) und einer Viskosität von 9 mPa.s bei 25°C gemischt und anschließend 1,9 g einer Lösung eines Platin-1,3-Divinyl-1,1,3,3-tetramethyldisiloxan-Komplexes in einem α,ω-Divinyldimethylpolysiloxan mit einer Viskosität von 1000 mPa.s bei 25°C mit einem Pt-Gehalt von 1,0 Gew.-% (sogenannter Karstedt-Katalysator, dessen Herstellung in US 3,775,452 beschrieben ist) zugegeben. Das Reaktionsgemisch erwärmt sich in wenigen Minuten auf ca. 80°C und wird ca. 1 h bei dieser Temperatur gerührt. Es wird ein verzweigtes Siloxanpolymer mit einer Viskosität von 220 mm²/s bei 25°C und einem Gehalt von Aktivwasserstoff von 0,067 Gew.-% erhalten. Dem Syntheseprinzip entsprechend bestehen sämtliche freien Siloxankettenenden aus den hochreaktiven Hydrogendimethylsiloxyeinheiten.

### Beispiel 2:

100 g (67 mMol SiH) des in Beispiel 1 hergestellten Hydrogensiloxanpolymers werden mit 9 g 1-Octen (80 mMol C=C) vermischt (C=C/SiH -Verhältnis = 1,2), auf 100°C erwärmt und mit 0,5 mg Platin in Form der in Beispiel 1 beschriebenen Karstedt-Katalysatorlösung gestartet. Eine leichte Exothermie zeigt den Ablauf der Olefinaddition an, die nach ca. 2 h beendet ist.
Die Prüfung auf Aktivwasserstoff (Si-gebundenen Wasserstoff) ergibt mehr als 99 % Umsatz.

Es wird nach Entfernung des Olefinüberschusses ein klares Produkt mit einer Viskosität von 320 mm²/s bei 25°C erhalten. Das verzweigte Siloxanpolymer ist an den freien Siloxankettenenden mit Octylgruppen modifiziert. Mit mittelviskosen Siliconölen sind homogene Mischungen erhältlich.

### Vergleichsbeispiel:

Die Arbeitsweise von Beispiel 2 wird wiederholt mit der Abänderung, dass anstelle des 1-Octens 80 mMol C=C in Form des 1,7-Octadiens (C=C/SiH -Verhältnis = 1,2) eingesetzt wird.
Es wird unter sonst gleichen Reaktionsbedingungen bei starker Viskositätserhöhung ein in Toluol unlöslicher Feststoff erhalten. Das Produkt kann mit Siliconöl nicht homogen abgemischt werden.

### Beispiel 3:

100 g des in Beispiel 1 hergestellten Hydrogensiloxanpolymers werden in eine 100°C warme Mischung aus 226 g eines monoallylischen Polyethers mit durchschnittlich 24 Ethylenoxyund 25 Propylenoxygruppen der Formel

CH₂=CH-CH₂-O-(CH₂CH₂O)₂₄-(CH₂CH₂CH₂O)₂₅-H

(C=C/SiH = 1,3) und 0,3 g der in Beispiel 1 beschriebenen Karstedt-Katalysatorlösung (Pt-Gehalt = 1,0 Gew.-%) dosiert. Nach insgesamt 3 h Reaktionszeit ist der Aktivwasserstoff (Si-gebundene Wasserstoff) vollständig umgesetzt. Nach Abkühlen auf 25°C wird ein klares, sehr viskoses Produkt mit 18.400 mPa.s bei 25°C erhalten. Die freien Kettenenden sind mit linearen Polyetherketten modifiziert.

### Vergleichsbeispiel 2:

219 g eines linearen, α,ω-Dihydrogenpolydimethylsiloxans mit einem Gehalt an Si-gebundenem Wasserstoff von 0,014 Gew.-% und einer Viskosität von 982 mPa·s bei 25°C werden mit 0,75 g Methyltrivinylsilan (SiH/C=C = 1,7)umgesetzt. Der in Beispiel 1 beschriebene Karstedt-Katalysator wird bei 25°C in einer Menge von 10 Gew.-ppm Platin, bezogen auf Siloxan, zudosiert, nachdem das Reaktionsgemisch mit der halben Menge Toluol verdünnt wurde. Die Lösung wird auf 80°C erwärmt, worauf sie stark eindickt. Dann werden 1,1 g 3-Methylbut-1-in-3-ol (C=C/SiH = 1,05) zugegeben, und man lässt 1 Stunde bei 100°C ausreagieren.
Nach dem Eindunsten einer Probe der Lösung in einer Schale wird ein stark verzweigtes Siloxanpolymer mit einer sehr hohen Viskosität, dessen Kettenenden OH-Funktionen aufweisen, erhalten. Das Polymer ist wiederum in Toluol klar löslich.

### Beispiel 4:

672 g (450 mMol SiH) des in Beispiel 1 hergestellten Hydrogensiloxanpolymers werden mit 1025 g (585 mMol C=C) eines monoallylterminierten Polyethers aus gleichen Molmengen Ethylenoxid und Propylenoxid turbulent gemischt (C=C/SiH = 1,3) und auf 100°C erwärmt. Danach gibt man 3,5 g einer Hexachloroplatinsäurelösung in Isopropanol (0,48 % Pt) zu. Bei leichter Exothermie wird die Mischung nach ca. 10 Minuten homogen. Man lässt weitere 3h bei 100°C rühren und erhält dann ein stark verzweigtes Polyethersiloxan mit einer Viskosität von 14970 mm²/s (25°C). Das ¹H-NMR-Spektrum zeigt einen SiH-Umsatz von ca. 99%.

### Beispiel 5:

672 g des in Beispiel 1 hergestellten Hydrogensiloxanpolymers werden auf 100°C erwärmt. Eine Mischung aus 90 g propoxyliertem Allylalkohol der Jodzahl 110 (231 g Polyether / Mol C = C) und 2,2 g Hexachloroplatinsäurelösung (0,48 % Pt) lässt man langsam zulaufen und 2 h lang ausreagieren (C=C/SiH = 1,16). Man erhält nach vollständigem SiH-Verbrauch ein klares Öl der Viskosität 520 mm²/s bei 25°C.

### Beispiel 6:

Zur Herstellung eines hochverzweigten OH-terminierten Siloxans ohne Polyethergruppierungen wiederholt man Beispiel 5 sinngemäß, in dem man statt 1025 g Allylpolyether nur 43 g 2-Methyl-3-buten-2-ol einsetzt (C=C/SiH = 1,11). In weniger als 1 h bei 100°C erhält man vollständigen SiH-Umsatz. Der Überschuss von 5 g tert. Alkohol wird bei 120°C entfernt, worauf man ein klares Multihydroxysiloxanpolymer der Viskosität 410 mm²/s (25°C) erhält.

### Beispiel 7:

Siloxanpolymere mit noch höherer Verzweigung können hergestellt werden, indem ein bereits stark verzweigtes Hydrogensiloxanpolymer mit einer kleinen Menge einer Divinylverbindung weiter umgesetzt wird. 384 g des in Beispiel 1 erzeugten Polymers werden mit 44 g α,ω-Divinylsiloxan der durchschnittlichen Molmasse von 1104 (Mn) homogen vermischt und 4 h bei 100°C gehalten.
Die ursprüngliche Viskosität des Hydrogensiloxanpolymers steigt in der Folge bis auf 1100 mm²/s bei 25°C an, der Gehalt an Aktivwasserstoff (Si-gebundener Wasserstoff) sinkt auf 0,052 Gew.-%.

50% des Ansatzes werden mit 25 g 1-Octen (C=C/SiH = 2,0) gemischt und auf 100°C erwärmt, wobei eine leicht exotherme Reaktion einsetzt. Nach 1h wird überschüssiges Octen im Vakuum entfernt. Man erhält ein klares, sehr hochverzweigtes Öl der Viskosität 1330 mm²/s bei 25°C.

### Beispiel 8:

Die zweite Hälfte des in Beispiel 8 hergestellten höher verzweigten Hydrogensiloxanpolymers mit 0,052 Gew.-% Si-gebundenem Wasserstoff wird mit 55 g 1-Octadecen gemischt (C=C/SiH = 2,0) und 1 h lang auf 100°C erwärmt. Das erfindungsgemäße Siloxanpolymer ist durch überschüssiges Olefin verdünnt, welches unter Standardvakuum bei 100°C nicht entfernt werden kann, und hat deshalb eine Viskosität von nur 900 mm²/s bei 25°C.

### Beispiel 9:

Erfindungsgemäße Produkte höherer Viskosität sind auch erhältlich, wenn bei der Herstellung der Hydrogenkomponente mehr Trien (SiH/C=C = 1,56) verwendet wird. Wiederholt man daher das Beispiel 1 mit 115 g 1,2,4-Trivinylcyclohexan (statt nur 108 g), erhält man bereits ein höher verzweigtes Siloxanpolymer mit 750 mm²/s (25°C) und einem Gehalt an Si-gebundenem Wasserstoff von nur 0,060 Gew.-%.

200 g dieses Produktes mischt man mit 27 g 1-Octen (C=C/SiH = 2,0) und lässt bei 100°C in einer schwach exothermen Reaktion ausreagieren. Octenüberschuss wird nach 2h im Vakuum entfernt, worauf man ein klares Öl mit einer Viskosität von 1870 mm²/s bei 25°C erhält.

### Verwendung der verzweigten Siloxan(co)polymere als Antimisting Additive:

### Beispiel 10:

Bei hohem Auftragsgewicht und bestimmten Beschichtungsformulierungen kann die Aerosolbildung bereits bei Maschinengeschwindigkeiten deutlich unter 500 m/min auftreten. Die Anwendung der erfindungsgemäßen verzweigten Siloxancopolymere zur Reduktion der Aerosolbildung erfolgte als Additiv in vernetzbaren Siliconbeschichtungssystemen für den Einsatz in solchen Beschichtungsprozessen.

Als Standardformulierung wurde eine Mischung aus
100 Gew.-teilen eines verzweigten Polysiloxans mit Vinyldimethylsiloxyendgruppen, das eine Viskosität von 420 mPa.s (25°C) und eine Jodzahl von 8,0 aufweist und gemäß Beispiel 3 von US 6,034,225 hergestellt wird,
3,6 Gew.-teile eines linearen Polysiloxans aus Hydrogenmethylsiloxan- und Trimethylsiloxaneinheiten im Molverhältnis 24 : 1,
1,04 Gew.-teile einer 1 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa·s bei 25°C und
0,3 Gew.-teile 1-Ethinylcyclohexanol
eingesetzt.

Die erfindungsgemäßen Additive gemäß den in Tabelle 1 angegebenen Herstellungsbeispielen wurden der Standardformulierung gemäß den in Tabelle 1 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 g/m² verwendet. Die Beschichtung erfolgte auf der Pilotbeschichtungsanlage der Fa. Dixon der Modellnummer 1060 mit einem 5-Walzen Auftragswerk, bei 150 m/min. Dabei wurde die Auftragsrolle mit 95% der Papiergeschwindigkeit gefahren. Die Beschichtung wurde im Trockenofen mit 3 m Länge bei 140°C ausgehärtet.

Die Aerosolbildung wurde mit dem Dusttrak Aerosol Monitor Model 8520 bestimmt. Die Probennahme erfolgte zwischen Siliconauftragswalze und Walzenspalt in einem Abstand von 12 cm zur Siliconauftragswalze. Zusätzlich wurde die Aerosolbildung visuell beurteilt und mit den Ziffern 1 - 3 bewertet:
1 keine sichtbare Aerosolbildung
2 schwach sichtbare Aerosolbildung
3 starke Aerosolbildung.

Während der Beschichtungsversuche wurden die maximal angezeigten Aerosolwerte protokolliert. Das Beschichtungsgewicht wurde mittels Röntgenfluoreszenzanalyse in Referenz zu einem geeigneten Standard bestimmt und betrug 2,5 g/m².
Die Ergebnisse sind in Tabelle 1 zusammengefasst.

**Tabelle 1:**

| Additiv | Menge Additiv in % | Misting, mg/m³ (Dusttrak) | Misting (visuell) |
|---|---|---|---|
| Beispiel 4 | 2 | 4,8 | 1,5-2 |
| Beispiel 5 | 2 | 10 | 2 |
| Beispiel 6 | 2 | 6 | 2,5 |
| Beispiel 7 | 5 | 1,5 | 1 |
| Beispiel 8 | 2 | 5 | 2,5 |
| Beispiel 9 | 2 | 2,5 | 1 |
| - | - | 20 | 3 |

Die Vergleichsversuche zeigen, dass der Zusatz der erfindungsgemäßen verzweigten, organische Endfunktionen aufweisenden Siloxan(co)polymere als Antimisting Additive die Aerosolbildung vernetzbarer Siliconbeschichtungssysteme in schnellen Beschichtungsprozessen deutlich reduziert.

## Patentansprüche

1. Verzweigte Organosiloxan(co)polymere enthaltend Strukturelemente der Formel
Y[-CₙH₂ₙ-(R₂SiO)ₘ-Aₚ-R₂Si-G)ₓ (I)
wobei
Y einen drei- bis zehnwertigen Kohlenwasserstoffrestes mit 1 bis 25 Kohlenstoffatomen je Rest, der ein oder mehrere Heteroatome ausgewählt aus der Gruppe der Sauerstoff- und Stickstoffatome enthalten kann, bedeutet,
R gleich oder verschieden sein kann und einen einwertigen gegebenenfalls halogenierten Kohlenwasserstoffrest mit 1 bis 18 Kohlenstoffatomen je Rest bedeutet,
A einen Rest der Formel
-R₂Si-R²-(R₂SiO)ₘ-
bedeutet,
wobei R² ein zweiwertiger Kohlenwasserstoffrest mit 2 bis 30 Kohlenstoffatomen je Rest, der durch ein oder mehrere voneinander separate Sauerstoffatome unterbrochen sein kann, bedeutet,
G einen einwertigen Rest der Formel -C_{f}H_{2f-2k}-Z oder einen zweiwertigen Rest der Formel -CₙH₂ₙ- ,wobei die zweite Bindung an einen weiteren Rest Y erfolgt, bedeutet,
Z einen einwertigen von endständigen aliphatischen Kohlenstoff-Kohlenstoff-Mehrfachbindungen freien Kohlenwasserstoffrest, der in Hydrosilylierungsreaktionen gegenüber SiH-Gruppen inert ist und ein oder mehrere Heteroatome ausgewählt aus der Gruppe von Sauerstoff, Stickstoff, Bor, Silicium und Titan enthält, oder einen einwertigen Polymerrest mit mehr als 20 Kohlenstoffatomen bedeutet,
x eine ganze Zahl von 3 bis 10 ist,
f eine ganze Zahl von 2 bis 12 ist,
k 0 oder 1 ist,
n eine ganze Zahl von 2 bis 12 ist,
m eine ganze Zahl von mindestens 1 ist und
p 0 oder eine ganze positive Zahl ist,
mit der Maßgabe, dass die verzweigten Organosiloxan(co)polymere durchschnittlich mindestens eine Gruppe Z enthalten.

2. Verzweigte Organosiloxan(co)polymere nach Anspruch 1, **dadurch gekennzeichnet, dass** x 3 oder 4 ist.

3. Verzweigte Organosiloxan(co)polymere nach Anspruch 1 oder 2, **dadurch gekennzeichnet, dass** p 0 ist.

4. Verzweigte Organosiloxan(co)polymere nach Anspruch 1, 2 oder 3, **dadurch gekennzeichnet, dass** das Verhältnis von Endgruppen Z zu Verzweigungsgruppen Y 1,0 bis 2,0 beträgt.

5. Verfahren zur Herstellung von verzweigten Organosiloxan(co)polymere, **dadurch gekennzeichnet, dass** in einem ersten Schritt
mindestens drei aliphatische Doppelbindungen aufweisende Verbindungen (1) der Formel
Y(CR¹=CH₂)ₓ
wobei Y und x die in Anspruch 1 dafür angegebene Bedeutung haben und
R¹ ein Wasserstoffatom oder einen Alkylrest mit 1 bis 10 Kohlenstoffatomen bedeutet
mit Organopolysiloxanen (2) der allgemeinen Formel
H(R₂SiO)ₘ-Aₚ-R₂SiH
wobei A, R, m und p die in Anspruch 1 dafür angegebene Bedeutung haben,
in Gegenwart von die Anlagerung von Si-gebundenem Wasserstoff an aliphatische Mehrfachbindung fördernden Katalysatoren (3),
umgesetzt werden,
und in einem zweiten Schritt die so erhaltenen Si-gebundene Wasserstoffatome aufweisenden verzweigten Zwischenprodukte (5) mit organischen Verbindungen (4) der Formel
C_{f}H_{2f-2k-1}-Z
ausgewählt aus der Gruppe von
wenn k=0:
H₂C=CR³-Z (4a)
und
wenn k=1:
R⁴C≡C-Z (4b)
wobei R³ und R⁴ die Bedeutung von R¹ haben, und
f, k und Z die in Anspruch 1 dafür angegebene Bedeutung haben,
in Gegenwart von die Anlagerung von Si-gebundenem Wasserstoff an aliphatische Mehrfachbindung fördernden Katalysatoren (3),
umgesetzt werden.

6. Verfahren nach Anspruch 5, **dadurch gekennzeichnet, dass** als Verbindung (1) 1,2,4-Trivinylcyclohexan verwendet wird.

7. Verfahren nach Anspruch 5 oder 6, **dadurch gekennzeichnet, dass** das Organopolysiloxan (2) im ersten Verfahrensschritt in solchen Mengen eingesetzt wird, dass das Verhältnis von Si-gebundenem Wasserstoff in Organopolysiloxan (2) zu aliphatischer Doppelbindung in Verbindung (1) mindestens 1,5 beträgt.

8. Verfahren nach Anspruch 5, 6 oder 7, **dadurch gekennzeichnet, dass** die organische Verbindung (4) im zweiten Verfahrensschritt in solchen Mengen eingesetzt wird, dass das Verhältnis von aliphatischer Doppelbindung in (4a) bzw. aliphatischer Dreifachbindung in (4b) zu Si-gebundenem Wasserstoff in dem im ersten Verfahrensschritt erhaltenen Zwischenprodukt (5) 1,05 bis 2,0 beträgt.

9. Verwendung der verzweigten Siloxan(co)polymere nach einem der Ansprüche 1 bis 4 als Antimistung Additive zur Reduktion der Aerosolbildung in vernetzbaren Siliconbeschichtungszusammensetzungen.

10. Verwendung der verzweigten Siloxan(co)polymere herstellbar nach einem der Ansprüche 5 bis 8 als Antimistung Additive zur Reduktion der Aerosolbildung in vernetzbaren Siliconbeschichtungszusammensetzungen.

11. Verwendung nach Anspruch 9 oder 10, **dadurch gekennzeichnet, dass** als vernetzbare Siliconbeschichtungszusammensetzung solche enthaltend
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren
und gegebenenfalls
(D) Inhibitoren
eingesetzt werden.

12. Vernetzbare Siliconbeschichtungszusammensetzung mit reduzierter Aerosolbildung enthaltend
(X) Antimisting Additive nach einem der Ansprüche 1 bis 4 oder herstellbar nach einem der Ansprüche 5 bis 8
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren
und gegebenenfalls
(D) Inhibitoren

13. Formkörper hergestellt durch Vernetzung der Zusammensetzungen gemäß Anspruch 12.

14. Formkörper gemäß Anspruch 13, **dadurch gekennzeichnet, dass** es sich um Beschichtungen handelt.

15. Formkörper gemäß Anspruch 13, **dadurch gekennzeichnet, dass** es sich um klebrige Stoffe abweisende Überzüge handelt.

16. Verfahren zur Herstellung von Beschichtungen durch Auftragen von vernetzbaren Zusammensetzungen gemäß Anspruch 12 auf die zu beschichtenden Oberflächen und anschließende Vernetzung der Zusammensetzungen.

17. Verfahren zur Herstellung von klebrige Stoffe abweisende Überzüge durch Auftragen von vernetzbaren Zusammensetzungen gemäß Anspruch 12 auf die klebrige Stoffe abweisend zu machenden Oberflächen und anschließende Vernetzung der Zusammensetzungen.

## Claims

1. Branched organosiloxane (co)polymers comprising structural elements of the formula
Y[-CₙH₂ₙ-(R₂SiO)ₘ-Aₚ-R₂Si-G]ₓ (I)
where
Y is a tri- to decavalent hydrocarbon radical, having from 1 to 25 carbon atoms per radical which may contain one or more heteroatoms selected from the group consisting of oxygen and nitrogen atoms,
R can be identical or different and is a monovalent, unhalogenated or halogenated hydrocarbon radical having from 1 to 18 carbon atoms per radical,
A is a radical of the formula -R₂Si-R²-(R₂SiO)ₘ-, in which R² is a divalent hydrocarbon radical having from 2 to 30 carbon atoms per radical which can be interrupted by one or more oxygen atoms separate from one another,
G is a monovalent radical of the formula -C_{f}H_{2f-2k}- Z or
a divalent radical of the formula -CₙH₂ₙ-, the second bond being to a further radical Y,
Z is a monovalent hydrocarbon radical which is free from terminal aliphatic carbon-carbon multiple bonds, which is inert towards SiH groups in hydrosilylation reactions, and which contains one or more heteroatoms selected from the group consisting of oxygen, nitrogen, boron, silicon and titanium, or is a monovalent polymer radical having more than 20 carbon atoms,
x is an integer from 3 to 10,
f is an integer from 2 to 12,
k is 0 or 1,
n is an integer from 2 to 12,
m is an integer which is at least 1, and
p is 0 or a positive integer,
with the proviso that the branched organosiloxane (co)polymer contains on average at least one group Z.

2. Branched organosiloxane (co)polymers according to Claim 1, **characterized in that** x is 3 or 4.

3. Branched organosiloxane (co)polymers according to Claim 1 or 2, **characterized in that** p is 0.

4. Branched organosiloxane (co)polymers according to Claim 1, 2 or 3, **characterized in that** the ratio of end groups Z to branching groups Y is from 1.0 to 2.0.

5. Process for preparing branched organosiloxane (co)polymers, **characterized in that** it comprises in a first step reacting compounds (1) containing at least three aliphatic double bonds, of the formula
Y(CR¹=CH₂)ₓ
where Y and x are as defined in Claim 1 and
R¹ is a hydrogen atom or an alkyl radical having from 1 to 10 carbon atoms
with organopolysiloxanes (2) of the general formula
H(R₂SiO)ₘ-Aₚ-R₂SiH
where A, R, m and p are as defined in Claim 1,
in the presence of catalysts (3) which promote the addition of Si-bonded hydrogen onto aliphatic multiple bond,
and in a second step reacting the resulting branched intermediates (5) containing Si-bonded hydrogen atoms with organic compounds (4) of the formula
C_{f}H_{2f-2k-1}-Z
selected from the group consisting of
if k=0 :
H₂C=CR³-Z (4a)
and
if k = 1 :
R⁴C≡C-Z (4b)
in which R³ and R⁴ have the definition of R¹ and
f, k and Z are as defined in Claim 1
in the presence of catalysts (3) which promote the addition of Si-bonded hydrogen onto aliphatic multiple bond.

6. Process according to Claim 5, **characterized in that** 1,2,4-trivinylcyclohexane is used as compound (1).

7. Process according to Claim 5 or 6, **characterized in that** the organopolysiloxane (2) is used in the first process step in amounts such that the ratio of Si-bonded hydrogen in organopolysiloxane (2) to aliphatic double bond in compound (1) is at least 1.5.

8. Process according to Claim 5, 6 or 7, **characterized in that** the organic compound (4) is used in the second process step in amounts such that the ratio of aliphatic double bond in (4a) and/or aliphatic triple bond in (4b) to Si-bonded hydrogen in the intermediate (5) obtained in the first process step is from 1.05 to 2.0.

9. Use of the branched siloxane (co)polymers according to any of Claims 1 to 4 as an antimisting additive for reducing the formation of aerosol in crosslinkable silicone coating compositions.

10. Use of the branched siloxane (co)polymers preparable according to any of Claims 5 to 8 as an antimisting additive for reducing the formation of aerosol in crosslinkable silicone coating compositions.

11. Use according to Claim 9 or 10, **characterized in that** crosslinkable silicone coating compositions used are those comprising
(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond,
and if desired
(D) inhibitors.

12. Crosslinkable silicone coating composition featuring reduced aerosol formation, comprising
(X) antimisting additives according to any of Claims 1 to 4 or preparable according to any of Claims 5 to 8,
(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond,
and if desired
(D) inhibitors.

13. Shaped bodies produced by crosslinking the compositions of Claim 12.

14. Shaped bodies of Claim 13, **characterized in that** they are coatings.

15. Shaped bodies of Claim 13, **characterized in that** they are coatings which repel tacky substances.

16. Process for producing coatings by applying crosslinkable compositions according to Claim 12 to the surfaces that are to be coated and then crosslinking the compositions.

17. Process for producing coatings which repel tacky substances by applying crosslinkable compositions according to Claim 12 to the surfaces that are to be made repellent to tacky substances and then crosslinking the compositions.

## Revendications

1. (Co)polymères ramifiés d'organosiloxane contenant des éléments de structure de formule
Y[-CₙH₂ₙ-(R₂SiO)ₘ-Aₚ-R₂Si-G]ₓ (I)
dans laquelle
Y signifie un radical hydrocarboné trivalent à décavalent, comprenant 1 à 25 atomes de carbone par radical, qui peut contenir un ou plusieurs hétéroatomes choisis dans le groupe constitué par les atomes d'oxygène et d'azote,
R peut être identique ou différent et signifie un radical hydrocarboné monovalent, le cas échéant halogéné, comprenant 1 à 18 atomes de carbone par radical,
A signifie un radical de formule
-R₂Si-R²-(R₂SiO)ₘ-
où
R² signifie un radical hydrocarboné divalent comprenant 2 à 30 atomes de carbone par radical, qui peut être interrompu par un ou plusieurs atomes d'oxygène séparés les uns des autres,
G signifie un radical monovalent de formule -C_{f}H_{2f-} ₂ₖ-Z ou un radical divalent de formule -CₙH₂ₙ-, la deuxième liaison se faisant avec un autre radical Y,
Z signifie un radical hydrocarboné monovalent, exempt de liaisons carbone-carbone aliphatiques multiples en position terminale, qui est inerte par rapport aux groupes SiH dans les réactions d'hydrosilylation et qui contient un ou plusieurs hétéroatomes choisis dans le groupe constitué par l'oxygène, l'azote, le bore, le silicium et le titane ou un radical polymère monovalent comprenant plus de 20 atomes de carbone,
x représente un nombre entier de 3 à 10,
f représente un nombre entier de 2 à 12,
k représente 0 ou 1,
n représente un nombre entier de 2 à 12,
m représente un nombre entier d'au moins 1 et
p représente 0 ou un nombre entier positif, à condition que les (co)polymères ramifiés d'organosiloxane contiennent en moyenne au moins un groupe Z.

2. (Co)polymères ramifiés d'organosiloxane selon la revendication 1, **caractérisés en ce que** x représente 3 ou 4.

3. (Co)polymères ramifiés d'organosiloxane selon la revendication 1 ou 2, **caractérisés en ce que** p représente 0.

4. (Co)polymères ramifiés d'organosiloxane selon la revendication 1, 2 ou 3, **caractérisés en ce que** le rapport des groupes terminaux Z aux groupes de ramification Y est de 1,0 à 2,0.

5. Procédé pour la préparation de (co)polymères ramifiés d'organosiloxane, **caractérisé en ce qu'**on transforme, dans une première étape
des composés (1) présentant au moins trois doubles liaisons aliphatiques de formule
Y(CR¹=CH₂)ₓ
dans laquelle Y et x ont la signification indiquée dans la revendication 1 et
R¹ signifie un atome d'hydrogène ou un radical alkyle comprenant 1 à 10 atomes de carbone
avec des organopolysiloxanes (2) de formule générale
H(R₂SiO)ₘ-Aₚ-R₂SiH
dans laquelle A, R, m et p ont la signification indiquée dans la revendication 1,
en présence de catalyseurs (3) favorisant l'addition d'hydrogène lié par Si sur une liaison aliphatique multiple,
et dans une deuxième étape, on transforme les produits intermédiaires (5) ramifiés, présentant des atomes d'hydrogène liés par Si ainsi obtenus avec des composés organiques (4) de formule
C_{f}H_{2f-2k-1}-Z
choisis dans le groupe constitué par
lorsque k=0 :
H₂C=CR³-Z (4a)
et
lorsque k=1 :
R⁴C≡C-Z (4b)
où R³ et R⁴ ont la signification de R¹ et f, k et Z ont la signification indiquée dans la revendication 1,
en présence de catalyseurs (3) favorisant l'addition d'hydrogène lié par Si sur une liaison aliphatique multiple.

6. Procédé selon la revendication 5, **caractérisé en ce qu'**on utilise comme composé (1) du 1,2,4-trivinylcyclohexane.

7. Procédé selon la revendication 5 ou 6, **caractérisé en ce que** l'organopolysiloxane (2) est utilisé dans la première étape de procédé en des quantités telles que le rapport d'hydrogène lié par Si dans l'organopolysiloxane (2) à la double liaison aliphatique dans le composé (1) est d'au moins 1,5.

8. Procédé selon la revendication 5, 6 ou 7, **caractérisé en ce que** le composé organique (4) dans la deuxième étape de procédé est utilisé en des quantités telles que le rapport de la double liaison aliphatique dans (4a) ou de la triple liaison aliphatique dans (4b) à hydrogène lié par Si dans le produit intermédiaire (5) obtenu dans la première étape de procédé est de 1,05 à 2,0.

9. Utilisation des (co)polymères ramifiés de siloxane selon l'une quelconque des revendications 1 à 4, comme additif anti-buée pour la réduction de la formation d'aérosol dans des compositions réticulables de revêtement de silicone.

10. Utilisation des (co)polymères ramifiés de siloxane pouvant être préparés selon l'une quelconque des revendications 5 à 8 comme additif anti-buée pour la réduction de la formation d'aérosol dans des compositions réticulables de revêtement de silicone.

11. Utilisation selon la revendication 9 ou 10, **caractérisée en ce qu'**on utilise comme composition réticulable de revêtement de silicone une composition contenant
(A) des composés organosiliciés qui présentent des radicaux avec des liaisons carbone-carbone multiples aliphatiques,
(B) des composés organosiliciés présentant des atomes d'hydrogène liés par Si
(C) des catalyseurs favorisant l'addition d'hydrogène lié par Si sur une liaison multiple aliphatique et, le cas échéant
(D) des inhibiteurs.

12. Composition réticulable de revêtement de silicone avec une formation réduite d'aérosol, contenant
(X) des additifs anti-buée selon l'une quelconque des revendications 1 à 4 ou pouvant être préparés selon l'une quelconque des revendications 5 à 8
(A) des composés organosiliciés qui présentent des radicaux avec des liaisons carbone-carbone multiples aliphatiques,
(B) des composés organosiliciés avec des atomes d'hydrogène liés par Si,
(C) des catalyseurs favorisant l'addition d'hydrogène lié par Si sur une liaison multiple aliphatique et, le cas échéant,
(D) des inhibiteurs.

13. Corps façonné préparé par la réticulation de compositions selon la revendication 12.

14. Corps façonné selon la revendication 13, **caractérisé en ce qu'**il s'agit de revêtements.

15. Corps façonné selon la revendication 13, **caractérisé en ce qu'**il s'agit de revêtements repoussant les substances adhésives.

16. Procédé pour la préparation de revêtements par application de compositions réticulables selon la revendication 12 sur les surfaces à revêtir et réticulation consécutive des compositions.

17. Procédé pour la préparation de revêtements repoussant les substances adhésives par application de compositions réticulables selon la revendication 12 sur les surfaces à rendre répulsives par rapport aux substances adhésives et réticulation consécutive des compositions.
